# EUROPEAN PATENT APPLICATION

(11) **EP 0 564 086 A1**
(43) Date of publication of application: **06.10.1993**
(21) Application number: 93301351.8
(22) Date of filing: 24.02.1993
(51) Int. Cl.: B64D 39/00

(54) **Locking device**

(30) Priority: 28.02.1992 GB 9204305
(71) Applicant: BRITISH AEROSPACE PUBLIC LIMITED COMPANY, Farnborough, Hants. GU14 6YU (GB)
(72) Inventor: Oliver, David John, Preston, Lancashire PR4 1AX (GB); Moore, William, Preston, Lancashire PR4 1AX (GB); Payne, Colin, Hamble, Hampshire SO3 5NF (GB); Ware, Donald, Hamble, Hampshire SO3 5NF (GB)
(74) Representative: Eastmond, John

(57) **Abstract**

Apparatus for preventing relative movement between a tube 12 and a collar 114 in a first state of deployment of a deployed refuelling probe, the components being moveable relative to one another in a second state of deployment, the first and second states of deployment being controlled by drive means, the apparatus including a crank assembly 200 also driven by the drive means which moves a locking pin 212 between a first position associated with the first state of deployment and in which the member prevents relative rotation between the two components, and a second position associated with the second state of deployment and in which the locking pin 212 allows relative movement between the two components.

## Description

This invention relates to a locking device, and more particularly to an apparatus for preventing relative movement between two components of a deployable device when in one state of deployment while allowing relative movement when in another state of deployment, the deployment of the deployable device and the operation of the locking apparatus both being controlled by the same drive means.

In published European patent application no. 0360451 there is described and illustrated a deployment arrangement comprising two telescopically moveable members which are lockable in an extended position by means of a locking claw which is locked by a latch plate and foot contained in a collar assembly mounted around the outer of the two members. One of the advantages of this arrangement is that it is self-locking on deployment in that it does not require a separately activated device or actuator to provide locking between the moveable members.

However we have found, in some instances, that the locking claw can be caused to unlock when pressure is applied to the members which acts against the actuator which deploys them and causes the same to withdraw or extend thereby allowing unlatching of the claw. To prevent this unlatching of the claw, a locking apparatus was required for preventing relative movement of a collar which housed the locking claw and the outermost of the two telescopically moveable members. In order that the highly desirable automatic self-locking operation of the arrangement could be maintained, it was a requirement for the locking apparatus to have automatic operation when the members were appropriately deployed.

Hydraulic and electric solenoid operation of the locking apparatus were considered, but such equipment was found to occupy more space than is desirable in many applications, such as an in-flight refuelling probe.

According to the invention there is provided apparatus for preventing relative movement between two components of a device when the device is in a first state of deployment, the said two components being moveable relative to one another in a second state of deployment, the selection of the first or second states of deployment being controlled by drive means, characterised in that the apparatus includes a moveable member moveable relative to the drive means driven by said drive means between a first position associated with said first state of deployment and in which the member prevents relative movement between said two components, and a second position associated with said second state of deployment and in which the member allows relative movement between said two components.

Preferably said moveable member is moved by a crank assembly which is connected to said drive means.

Optionally said two components include respective holes which are brought into alignment in said first state of deployment, and the drive means is adapted to then pass said moveable member therethrough so as to lockingly engage said two components.

For a better understanding of the invention an embodiment of it will now be described, by way of example only, reference being made to the accompanying drawings, in which:-
Fig. 1 is a side view of the cockpit region of an aircraft fitted with a flight refuelling probe showing the probe in both stowed and extended configurations;
Fig. 2 is a front view on part of the aircraft of Fig. 1, showing the probe in both the stowed and extended configurations;
Fig. 3 is a top plan view on part of the aircraft of Fig. 1 showing the probe in both the stowed and extended configurations;
Fig. 4 shows a detail, on an enlarged scale, of the probe, and a probe actuator, mounted on the aircraft of Fig. 1, when the probe is fully stowed;
Fig. 5 shows a detail of the front end of the probe of the aircraft of Fig. 1 when the probe is fully stowed;
Fig. 6 is a part-sectional detail view of a collar assembly of a flight refuelling probe when in a stowed position;
Fig. 7 is a transverse section view through the collar assembly taken on lines XV-XV of Fig. 6;
Figs. 8 - 11 show successive detail views of the collar assembly of Fig. 6 when moving to a fully extended position;
Fig. 12 shows a detail side view of the collar assembly when moved away from the fully extended position of Fig. 11 back towards the stowed position;
Figs. 13a and 13b show drive plate sections of outboard and inboard radius arms respectively;
Fig. 14 is a transverse part section view through the collar assembly taken on lines XVI-XVI of Fig. 6;
Fig 15 is a cross-sectional view taken on line XVIII - XVIII of Fig 14;
Fig. 16 is an end on view along line XVII of Fig. 14 with fixing members removed and with a crank assembly in a position corresponding to that of Figs. 14 and 15;
Fig. 17 is the same view as shown in Fig. 15 but with the crank assembly in a different position; and
Fig. 18 is the same view as shown in Fig. 16 but with the crank assembly in a position corresponding to that shown in Fig. 17.

For convenience features common to two or more drawings have been given the same reference numbers.

In the embodiment shown in the drawings a deployable flight refuelling probe 8 is stowed in a stowage area of restricted volume on board a military fighter aircraft and is deployable to an extended position which is spaced well away from the cockpit of the aircraft and which is clearly visible by the pilot.

It will be understood that both these requirements are very important. The spacing is necessary to ensure that the possibility of the refuelling drogue hitting sensitive parts of the aircraft is minimised and the visibility is necessary to provide the aircraft pilot with maximum assistance in coupling the refuelling probe to the drogue.

It will also be understood that there is very little free stowage volume in the cockpit area of the aircraft, particularly when, as is common, the nose of the aircraft is carrying sensitive radar equipment and this volume is not available for stowage of the probe 8.

In general terms, the flight refuelling probe arrangement illustrated in the drawings comprises a first arm member in the form of an inner tube 10 mounted on the aircraft structure 6 for pivotal movement about a first axis "P"; a second arm member in the form of an outer tube 12 telescopically mounted on the inner tube 10; a collar 114 rotatably connected to the inner end 16 of the outer tube; a radius arm 18 having one end mounted on the aircraft structure for pivotal movement about a second pivotal axis "Q" spaced from and parallel to the first pivotal axis "P", and the other end of the radium arm 18 being pivotally connected to said collar 114; a linear actuator 20 with associated linkages for driving the radius arm 18 to pivot about the second pivotal axis "Q" and thus to cause the flight refuelling probe to move from a stowed to a deployed configuration; and various cams and cam surfaces associated with the radius arm 18, said collar 114, and said outer tube 12 for imparting to the outer tube 12 a pre-programmed rotation and subsequent locking relative to the collar 114 as the radius arm pivots with respect to the collar 114 as the flight refuelling probe 8 moves to its extended configuration.

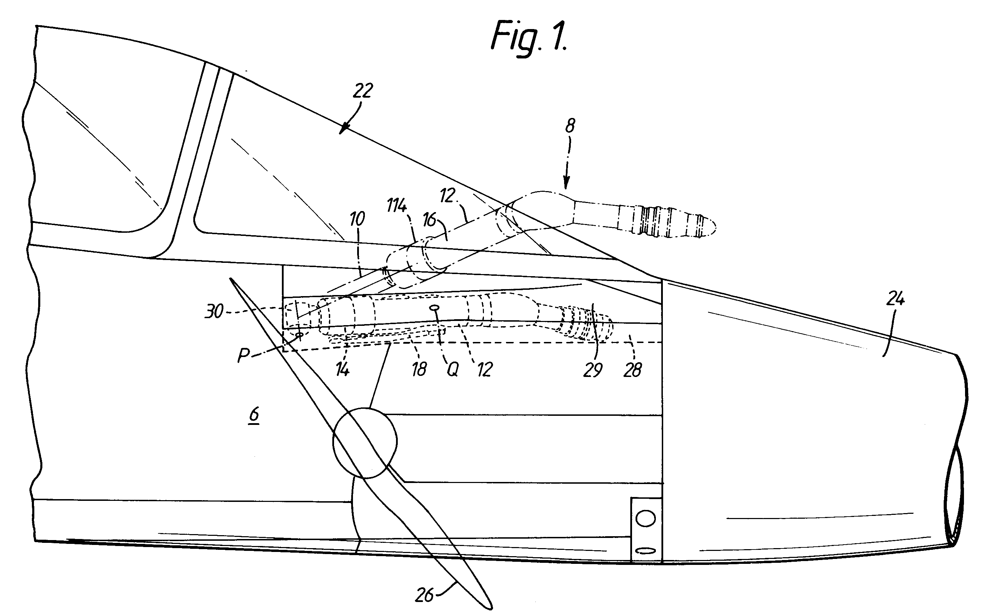

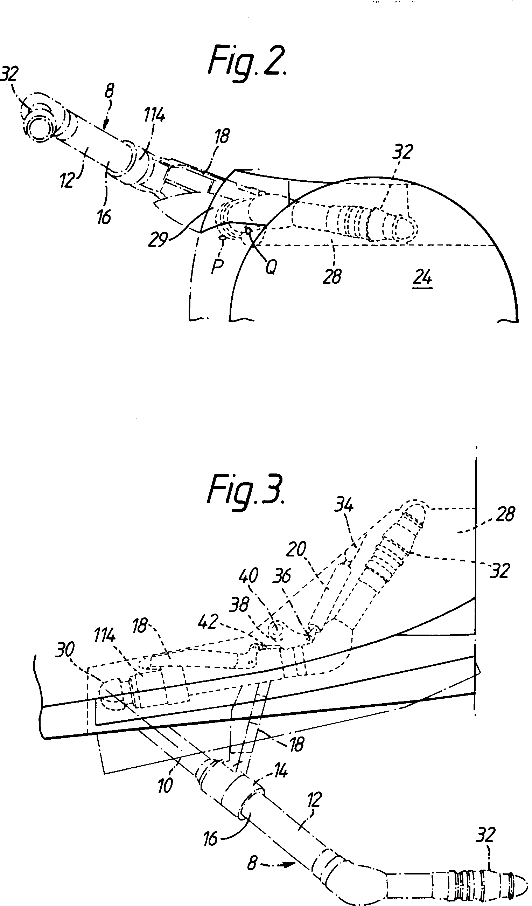

Referring now specifically to Figs. 1 - 3, a cockpit pf the aircraft includes a canopy 22, a radome 24 extending forwardly of the cockpit to house radar equipment, and a tiltable canard 26. The flight refuelling probe 8 when stowed lies in a restricted storage volume 28 in the fuselage below the lower edge of the canopy 22 behind a folding door 29. The storage volume 28 does not impinge on the area reserved for the radar equipment. Referring to Figs. 2 and 3 it will be seen that the refuelling probe and its deployment mechanism occupies a much smaller volume than would appear to be necessary, given the size and orientation of the probe when deployed.

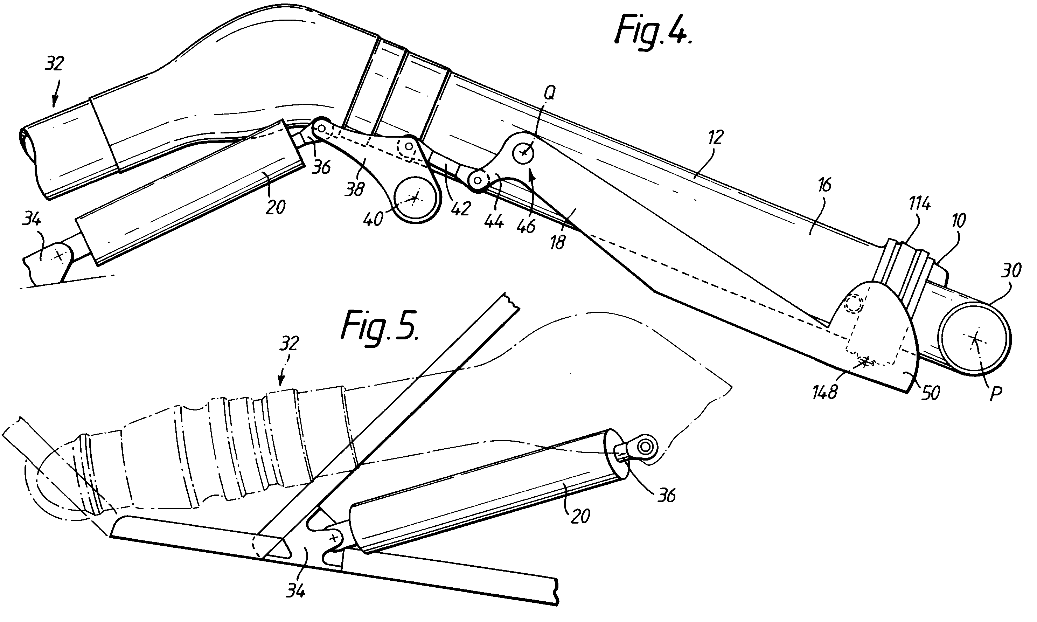

Fig. 4 shows the attachment of the inboard end of the probe to the aircraft structure and the actuator and its associated linkages. The inner end of the inner tube 10 is attached to the aircraft structure by a pivotal mounting 30 which allows pivotal movement of the inner tube 10 about the first axis "P". The inner tube 10 slidably supports the outer tube 12 for telescoping movement. The inner end 16 of the outer tube 12 supports the collar 114. The outer tube 12 has a portion which extends coaxially with respect to the inner tube 10 and another portion which is cranked through about 45° thereto and which carries at its free end the male portion 32 (Fig. 5) of the probe 8 which in use mates with the refuelling drogue (not shown). The inter-relationship between the inner and outer tubes will be described below.

The linear actuator 20 has one end pivotally coupled to a bracket 34 fixed to the aircraft structure. A rod 36 of the actuator is pivotally coupled to an arm of a crank 38 which is pivotally attached at 40 to the aircraft structure. A connecting rod 42 interconnects the crank 38 with a spur 44 of the radius arm 18. The radius arm 18 is pivotally attached at one end at 46 to the aircraft structure for movement about the second axis "Q". The other end of the radius arm is pivotally coupled at 148 to the collar 114. The inner tube 10, the collar 114 and the radius arm 18 together comprise a four-bar single slider chain which is driven by the linear actuator 20 and which moves generally within a single plane (the plane of the paper in Fig. 4). From the stowed position shown in Fig. 4, extension of the actuator rod 36, causes the radius arm 18 to rotate anti-clockwise about the second axis "Q" and thus will cause the inner tube 10 to rotate clockwise about the first axis "P" concurrently with sliding movement of the collar 114 relative to the inner tube 10. From the position in Fig. 4 the sliding movement will initially be in a contracting sense (i.e. with the collar 114 moving towards the first axis "P") until the radius aim 18 reaches a bottom dead centre position and thereafter the sliding movement will be in an extension sense.

The radius arm 18 has a driving plate 50 attached thereto adjacent the pivotal attachment 148 of the radius arm 18 to the collar 114. The driving plate 50 rotates with the radius arm 18 as the latter pivots about pivotal attachment 148.

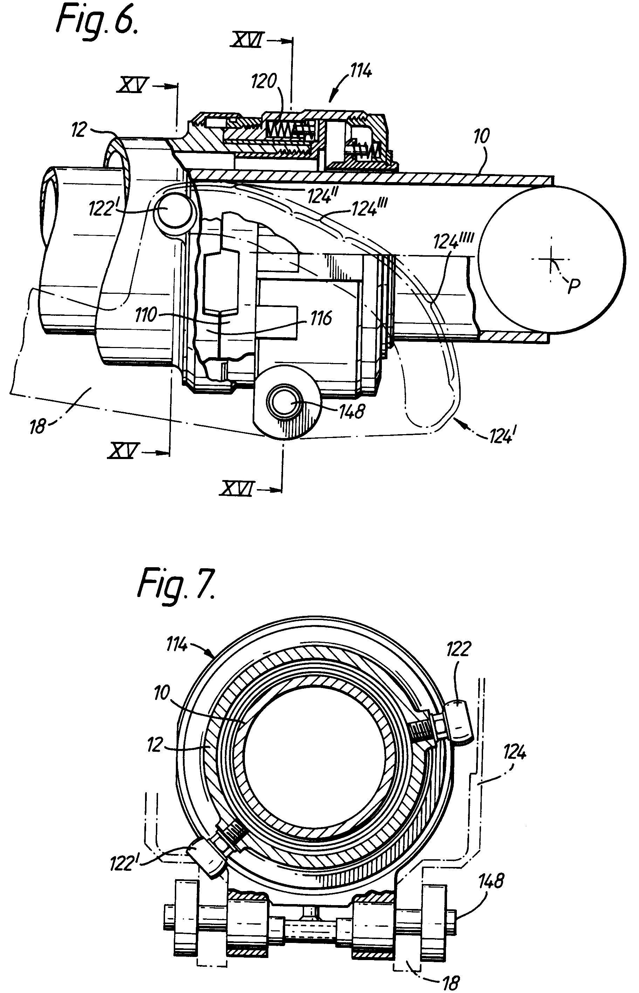

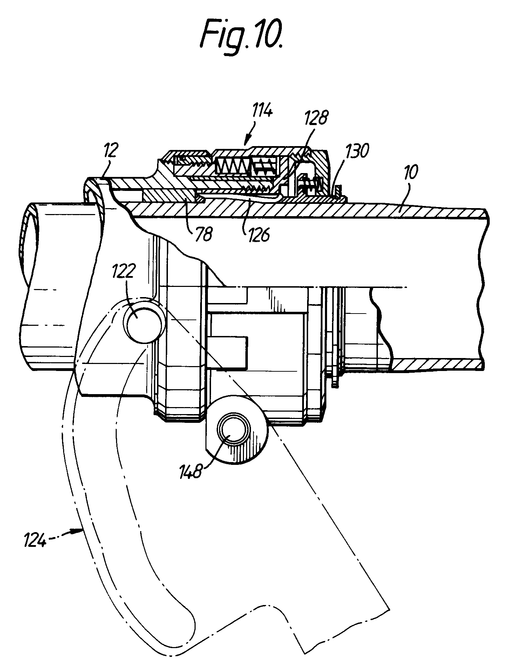

Referring now to Figs. 6 to 18, the inner tube 10 is as described above pivoted at "P" to a fixed aircraft structure and the outer tube 12 is slidably mounted on the inner tube 10 by means of a bearing 78 (see Fig. 10). The inner end of the outer tube 12 carries a collar 114, which is pivotally connected at 148 to a radius or drive arm 18, which is pivoted to the aircraft structure and coupled to actuator 20 which drives the drive arm 18.

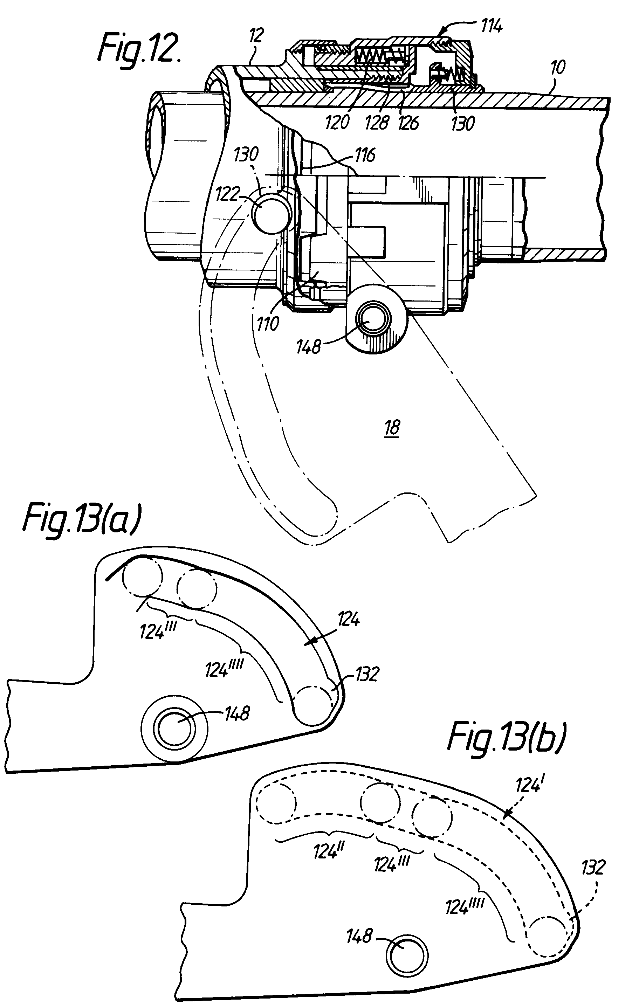

The collar 114 is slidably mounted for limited locking movement on the inner end of the outer tube 12, and carries a castellated locking portion 116 which faces a complementary locking portion 110 provided on the inner end of the outer tube 12. The outer tube 12 and collar 114 are urged towards a locked position by means of springs 120. The outer tube 12 carries inner and outer external radial cams 122, 122' each associated with a respective cam slot or track 124, 124' in the drive arm 18 (see Figs. 13a and b). The inboard cam track 124' in Fig. 13b defines a rotation section 124'', a locking section 124‴ and a deployment section 124'''', and the associated cam 122' engages the cam track throughout all phases of movement. The outboard cam track 124 in Fig. 13a defines only a locking section 124‴ and a deployment section 124'''', the associated cam 122 being "free" in the initial phase of movement.

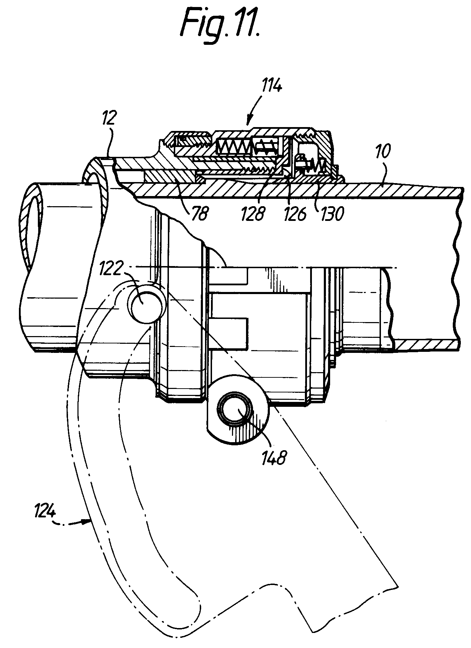

The outer end of the inner tube 10 includes a resilient claw 126 which usually lies against the outer surface of the inner tube 10. The inner end of the collar 114 is provided with a spring loaded foot 130 which, as the outer tube 12 moves to its fully extended position, lifts and keeps the claw 126 into locking engagement with a latch plate 128 on the outer tube 12, thus preventing relative contraction of the inner and outer tubes (Fig. 11).

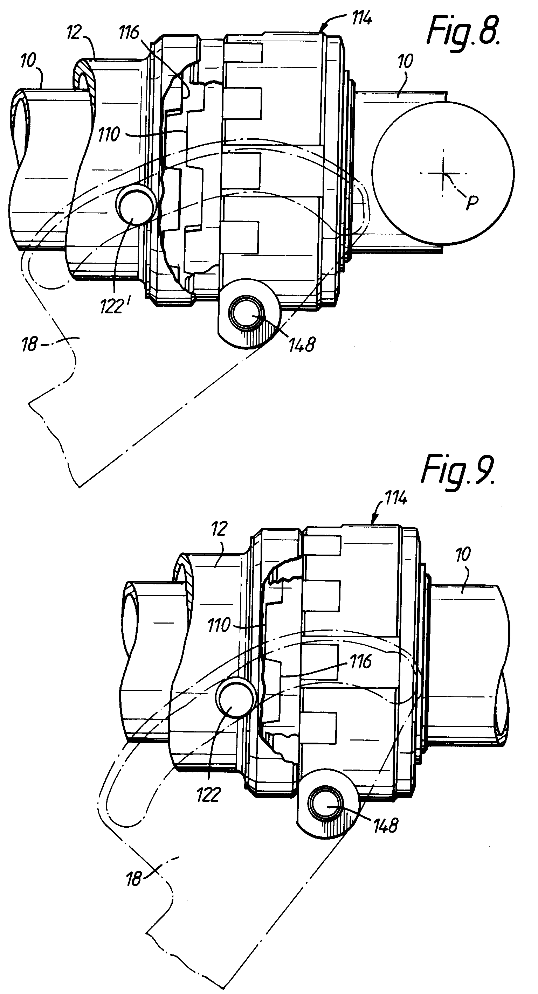

Deployment will now be described. When in the stored position shown in Fig. 6 the locking portions 116 and 110 are disengaged. Rotation of the drive arm 18 about its pivot on the aircraft structure causes pivoting of the drive arm 18 in the anticlockwise sense relative to the collar. The inboard cam 122' moves along the rotation section 124'' of the inboard cam track 124' so that the outer tube 12 executes a programmed rotation relative to the inner tube about their common longitudinal axis (Fig. 8). Continued rotation of the drive arm causes the outboard cam 122 to engage the outboard cam track 124 and each cam passes into and along the locking section 124‴ of the cam track so that the locking portions 116 and 110 engage thereby preventing relative rotation of the inner and outer tubes (see Fig. 9). Thereafter, the cams pass along the deployment section 124'''' of the cam tracks which are concentric with pivot 148 so that no camming movement is applied, and thus the outer tube 12 simply extends with respect to the inner tube 10. As the outer tube nears its outermost position, the latch plate 128 rides over the claw 126 and the spring loaded foot 130 engages the claw, moves against its spring bias (Fig. 10), and then lifts the claw 126 into locking engagement with the latch plate (Fig. 11). At this stage, the probe is fully extended and the inner and outer tubes 10, 12 are locked, both against relative contraction and against relative rotation.

To return the probe to its stowed position, the drive arm 18 is driven in the opposite sense by the actuator 20. Initially, the inner and outer tube remain locked by the claw 126 against contraction so that the collar 114 slides away from the outer tube 12 against the bias of springs 120 thus pulling the spring loaded foot 130 out from underneath the claw 126 so that the claw returns to its position against the inner tube, thus freeing the outer tube 12. To allow this initial unlocking movement, the ends of the cam tracks 124 and 124' are provided with a clearance lobe 132 which allows limited movement of the cams relative to the cam track. Thereafter, stowage simply follows deployment, but in reverse order.

However, as noted earlier, during coupling of the refuelling probe with the drogue and subsequent refuelling, sufficient force can be exerted on the probe to cause the rod 36 of the actuator 20 to change its amount of extension. This results in movement of the collar 114 relative to the outer tube 12 which can result in the claw 126 being released from its locking position, hence allowing relative sliding movement between the inner tube 10 and outer tube 12 (which is obviously undesirable during refuelling).

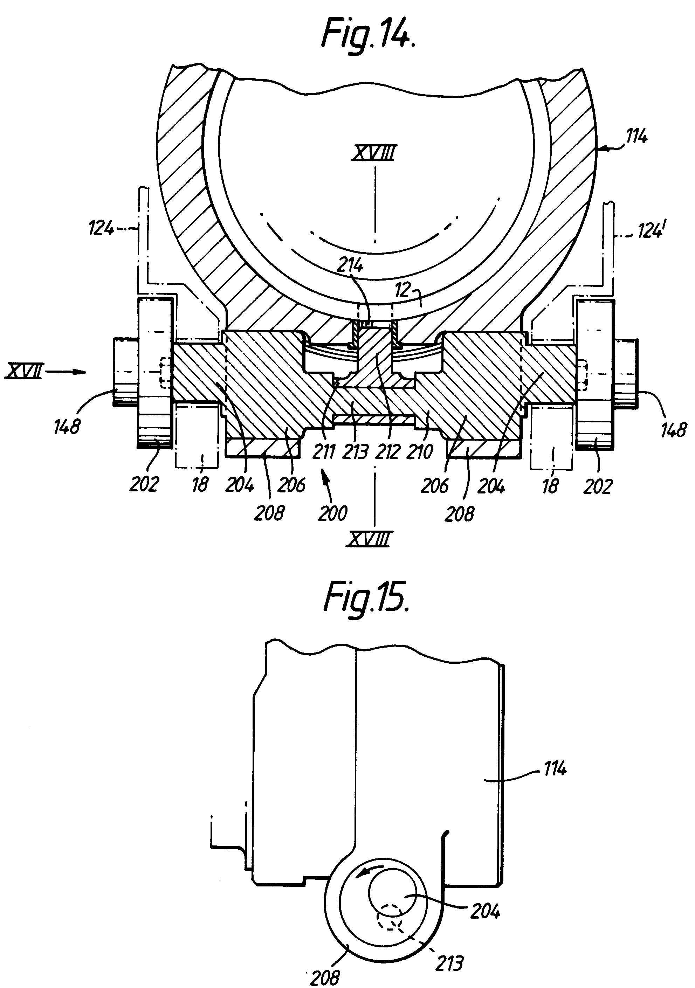

An apparatus for locking the collar 114 to the outer tube 12 when the probe is in its deployed position includes a crank assembly shown generally at 200 in Fig. 14. The crank assembly 200 comprises the pivotal connection 148 between the collar 114, and the radius arms 18 and cam tracks 124 and 124'.

The radius arms 18 are clamped to the crank assembly 200 by fixing members 202 which maintain a fixed relationship between the radius arms 18 and crank shafts 204 of the crank assembly 200. The journals 206 of the crank assembly 200 are supported in bearing surfaces formed in extensions 208 to collar 114 for rotation with respect thereto. A crank pin 210 having a reduced diameter central portion 213 connects the journals 206. A member 211 in which a bore 215 of elongated circular transverse cross-section is formed, and to which a locking pin 212 is attached, is mounted around the reduced diameter central portion 213 of the crank pin 210 for rotation with respect thereto.

In Figs. 14, 15 and 16, the locking pin 212 and the crank assembly 200 are shown in the stowed position in which the locking pin 212 is engaged in an appropriately sized hole in the collar 114 but not in the outer tube 12, thus allowing relative movement therebetween. This situation corresponds to that shown in Fig. 6, i.e. with the probe in its retracted position.

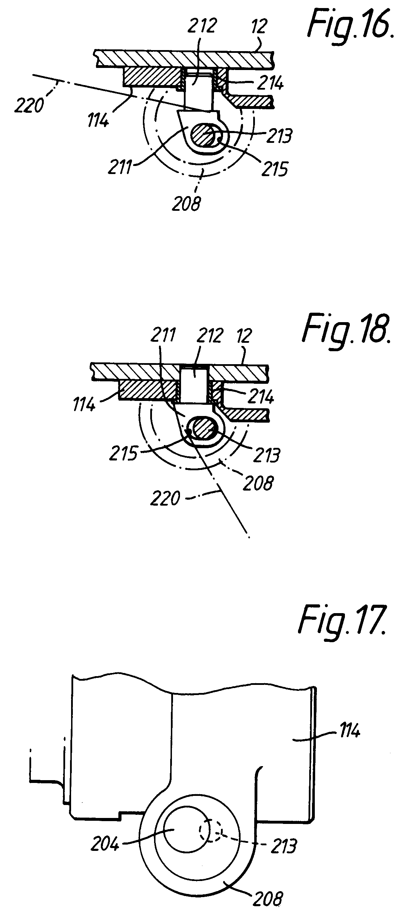

Figs. 17 and 18 show the locking pin 212 and crank assembly 200 in the deployed position, corresponding to that shown in Fig. 11, i.e. with the probe in its extended position. When the probe is extended, an appropriately sized hole in the outer tube comes into a position which corresponds to the aforementioned hole in the collar 114. This hole is shown ghosted at 214 in Fig. 14. When in this position the locking pin passes through both holes and locks the outer tube 12 and collar 114 together thereby preventing relative movement therebetween (see Fig. 18).

Movement of the locking pin 212 is caused by the change in orientation of the radius arm 18 relative to the collar 114 which occurs during the deployment of the probe. Because the crank assembly 200 is fixed in relation to the radius arm 18, the relative change in orientation causes the crank assembly 200 to rotate in extensions 208 to the collar 114. As can be seen from Figs. 14 - 18, the central axes of crankshafts 204, journals 206 and the crank pin 210 are offset relative to one another, thus the said rotation causes the distance between crank pin 210 and the main collar assembly 114 to change during the deployment cycle of the probe. This change in distance causes the locking pin 212 to pass into the hole 214 in the outer tube 12 at the appropriate moment and thus provide the desired locking. The bore 215 has an elongated circular cross-section in order to allow the locking pin 212 to maintain its orientation despite fore and aft movement (relative to the plane of the paper of Fig. 14) of the crank pin 210.

The orientation of the radius arm 18 is shown by line 220 in Figs. 16 and 18.

Many other modifications and variations will now suggest themselves to those skilled in the art. For example, the locking claw 126 could be replaced with the locking device described in our co-pending published European patent application no. 0 466 218.

## Claims

1. Apparatus for preventing relative movement between two components of a device when the device is in a first state of deployment, the said two components being moveable relative to one another in a second state of deployment, selection of the first or second states of deployment being controlled by drive means, charactersied in that the apparatus includes a moveable member (212) moveable relative to the drive means (18) and driven by said drive means (18) between a first position associated with said first state of deployment and in which the member (212) prevents relative movement between said two components (10,12), and a second position associated with said second state of deployment and in which the member (212) allows relative movement between said two components (10,12).

2. Apparatus according to claim 1, chracterised in that said moveable member (212) is moved by a crank assembly (200) which is connected to said drive means (18).

3. Apparatus according to claim 1 or 2 characterised in that said two components (10,12) include respective holes which are brought into alignment in said first state of deployment, and the drive means (18) is adapted to then pass said moveable member (212) therethrough so as to lockingly engage said two components (10,12).
